# EUROPÄISCHE PATENTSCHRIFT

(11) **EP 1 526 322 B1**
(45) Veröffentlichungstag und Bekanntmachung des Hinweises auf die Patenterteilung: **07.11.2007**
(21) Anmeldenummer: 04022000.6
(22) Anmeldetag: 16.09.2004
(51) Int. Cl.: F16L 53/00, F16L 11/12, F16L 9/12, H05B 3/58, H01B 7/00

(54) **Fluidleitung**
Fluid conduit
Conduit de fluide

(30) Priorität: 21.10.2003 DE 10349418; 14.01.2004 DE 102004001887
(43) Veröffentlichungstag der Anmeldung: 27.04.2005
(73) Patentinhaber: NORMA Germany GmbH, 63277 Maintal (DE)
(72) Erfinder: Kertesz, Janos, 65719 Hofheim (DE)
(74) Vertreter: Knoblauch, Andreas

(56) Entgegenhaltungen:
- EP-A- 0 142 624
- WO-A-96/11356
- DE-A- 1 775 094
- DE-A- 4 230 795
- DE-U- 20 114 231
- GB-A- 1 160 805
- GB-A- 2 197 419
- US-A- 2 003 586
- US-A- 3 623 337
- US-A- 3 780 208
- US-A- 4 133 972
- US-A1- 2003 007 789

## Beschreibung

Die Erfindung betrifft eine Fluidleitung mit einem Rohr, das eine Hülle aus einem Gewebe oder Geflecht aufweist, das seinerseits mindestens einen Leiter aufweist.

Eine derartige Fluidleitung wird häufig zum Beheizen eines Fluids in Kraftfahrzeugen eingesetzt, das bei tiefen Temperaturen gefriert oder zähflüssig wird.

So ist aus der DE 199 15 228 A1 eine beheizbare Fluidleitung für eine Kraftfahrzeug-Bremsvorrichtung bekannt, bei der auf einem inneren Rohr aus Gummi eine mittlere Gummischicht vorgesehen ist, in der ein die Hülle bildendes Verstärkungsgewebe eingebettet ist und die von einer radial äußeren Gummischicht umgeben ist. In das Verstärkungsgewebe ist ein elektrischer Heizleiter eingewebt oder eingeflochten. Die Herstellung dieser mehrschichtigen Fluidleitung ist aufwendig

Aus der deutschen Patentanmeldung DE 17 75 094 A ist eine Fluidleitung nach dem Oberbegriff des Patentanspruchs 1 bekannt, bei der der Leiter ein niederohmiger elektrischer Erdungsleiter ist. Der Leiter umgibt einen wendelgewellten Metallschlauch, der zusammen mit dem Leiter von einem Edelstahl-Drahtgeflecht umgeben ist. Die Herstellung dieser Fluidleitung ist ebenfalls aufwendig.

Aus der europäischen Patentanmeldung EP-A-0 142 624 ist eine Fluidleitung bekannt, die einen Innenschlauch aus Kautschuk und eine den Innenschlauch umgebende Geflechtlage mit einem Kautschukmantel aufweist. Die Geflechtlage enthält mehrere parallele Gruppen aus parallelen Heizwiderstandsdrähten mit zwischen den Gruppen angeordneten Textilfadensträngen. Die Heizwiderstandsdrahtgruppen und Textilstränge verlaufen wendelförmig um den Innenschlauch herum und sind mit Textilsträngen verwebt.

Die Patentschrift US-A-2 003 586 zeigt einen bei der Formgebung wendelförmig um ein Bündel aus feinen, weichen Drähten, vorzugsweise Stahldrähten, herumgewickelten elektrischen Leiter. Nach Ausbildung der Wendel werden die Stahldrähte aus der Wendel herausgezogen. Die Wendel wird dann in einen axialen Kanal in der Wand eines Gummirohres eingeführt. Der Leiter dient als Stromversorgungsleitung eines Elektromagneten zur Betätigung eines Ventils, das den Durchfluß durch das Rohr steuert. Bei dem Leiter handelt es sich nicht um einen Heizdraht.

Der Erfindung liegt die Aufgabe zugrunde, eine Fluidleitung der eingangs genannten Art anzugeben, deren Aufbau einfacher ist.

Erfindungsgemäß besteht die Lösung in einer Fluidleitung, wie sie im Patentanspruch 1 definiert ist.

Bei dieser Lösung entfällt eine mittlere Gummischicht, in der die Hülle eingebettet ist, und das Einbetten des die Hülle bildenden Gewebes oder Geflechts in der mittleren Schicht.

Das Rohr muß nicht aus Gummi bestehen, kann aber ebenfalls aus Gummi oder einem anderen Werkstoff bestehen, z.B. aus thermoplastischem Kunststoff oder Metall. Die Hülle kann mithin nach Fertigstellung des Rohres um dieses herum auf einfache Weise hergestellt werden. Gleichzeitig kann der Leiter in der Hülle eingewebt oder eingeflochten werden. Gegebenenfalls können die Hülle und der Leiter nachgerüstet werden. Bei hinreichender Festigkeit der Hülle kann sie ebenfalls zur Verstärkung oder zum Schutz des Rohres dienen. Wenn ein Ende des Leiters nach der Ausbildung der Hülle mit einem Ende der Hülle bündig abschließt, aber das andere Leiterende hinreichend weit aus dem anderen Ende der Hülse herausragt, kann der Leiter, da er lose in der Hülle angeordnet ist, auf einfache Weise an dem herausragenden Ende erfaßt und etwas aus der Hülle herausgeschoben werden, um beide Enden des Leiters mit Anschlüssen zu versehen oder, bei zwei Leitern, aus der Hülle herausragende bzw. herausgezogene Leiterenden zu verbinden, so daß sich ein Hin- und Rückleiter ergibt.

Ferner kann die Hülle das Rohr nach außen freiliegend umgeben. Gegebenenfalls entfällt eine äußere Gummischicht.

Ferner kann dafür gesorgt sein, daß jeder Heizleiter in der Hülle eingewebt oder eingeflochten ist und durch das Material der Hülle hindurch stellenweise am Rohr anliegt. Dies ergibt eine bessere Wärmeübertragung zwischen Rohr und Heizleiter.

Ferner kann die gesamte Hülle aus Glas-, Kunststoff-, Natur-, Kohlenstoff-, Mineral- oder Metallfasern bestehen. Aus solchen Fasern läßt sich das Geflecht oder Gewebe leicht herstellen.

Sodann kann jeder Leiter in dem Gewebe oder Geflecht geradlinig oder gewunden angeordnet sein. Insbesondere kann jeder Leiter wendelförmig um das Rohr herumgewikkelt sein.

Das Rohr kann glatt oder gewellt sein, wobei die Hülle lose auf dem Rohr angeordnet sein kann. Sie läßt sich dann, auch bei einem gewellten Rohr, leicht auf dem Rohr bis zu der gewünschten Position verschieben, insbesondere, wenn sie nachgerüstet wird.

Ferner kann jeder Leiter in der Hülle in deren Längsrichtung verschiebbar sein. Er ist dann durch Zusammenstauchen der Hülle an seinen Enden leicht zugänglich, um ihn mit einer Stromquelle zu verbinden. Ferner kann das Rohr durch das Zusammenstauchen der Hülle an seinen Enden vorübergehend zum Festklemmen des Rohres beim Einführen eines Steckverbinders in das Rohrende freigelegt werden.

Alternativ zu einer völlig losen Anordnung der Hülle auf dem Rohr kann sie an mindestens einer Stelle auf dem Rohr befestigt sein. Sie ist dann nachträglich nicht mehr verschiebbar.

Statt die Hülle außen frei zu lassen, kann sie auch von einer Schutzhülle umgeben sein, die thermoplastischen Kunststoff aufweist und um die erstgenannte Hülle herum angeordnet, herumgespritzt oder auf sie aufextrudiert wird. Auch hierbei kann zunächst ein Teil des Leiters seitlich aus der erstgenannten Hülle herausgezogen und die erstgenannte Hülle auf die gewünschte Länge zugeschnitten werden, bevor die Schutzhülle aufgebracht wird, so daß der Leiter nach dem Aufbringen der Schutzhülle freiliegt und mit Anschlüssen versehen werden kann, oder bei zwei Leitern, deren Enden verbunden werden können, um einen Hin- und Rückleiter zu bilden.

Die Erfindung und ihre Weiterbildungen werden nachstehend anhand der beiliegenden Zeichnungen bevorzugter Ausführungsbeispiele näher beschrieben. Darin stellen dar:
- Fig. 1: eine Seitenansicht eines ersten Ausführungsbeispiel einer erfindungsgemäßen Fluidleitung,
- Fig. 2: den Schnitt II-II der Fig. 1,
- Fig. 3: eine Seitenansicht eines zweiten Ausführungsbeispiels einer erfindungsgemäßen Fluidleitung,
- Fig. 4: den Schnitt IV-IV der Fig. 3 und
- Fig. 5: eine Seitenansicht eines dritten Ausführungsbeispiels einer erfindungsgemäßen Fluidleitung.

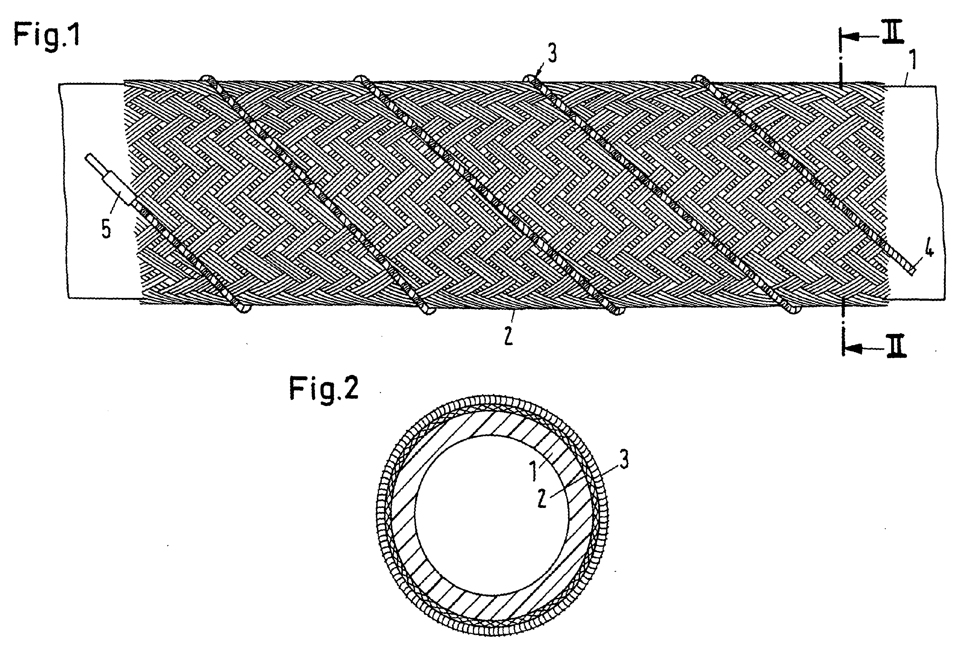

Das Ausführungsbeispiel der erfindungsgemäßen Fluidleitung nach den Fig. 1 und 2 besteht aus einem Rohr 1, einer das Rohr 1 umgebenden Hülle 2 in Form eines Geflechts und einem in das Geflecht eingeflochtenen Heizleiter 3.

Das Rohr 1 besteht aus Kunststoff, vorzugsweise thermoplastischem Kunststoff, wie Polyamid, kann aber auch aus Gummi oder Metall bestehen. Es kann aber auch ein Mehrschichtrohr sein. In jedem Fall ist es gegenüber Kohlenwasserstoffen, wie Öl, impermeabel. Dargestellt ist ein glattes Rohr. Es kann aber auch gewellt sein. Vorzugsweise ist es biegsam.

Die Hülle 2 ist ein Fasergeflecht aus Kunststoff-Fasern, sie kann aber auch aus Glas-, Natur-, Mineral- oder Metallfasern bestehen. Sie ist lose auf dem Rohr 2 angeordnet und liegt im fertigen Zustand der Fluidleitung nach außen frei. Ferner ist sie auf dem Rohr 2 verschiebbar. Sie kann daher nachträglich auf dem Rohr angeordnet und bis zu der gewünschten Stelle verschoben werden. Die Hülle 2 hat eine hohe Festigkeit, so daß sie das Rohr 1 vor einer übermäßigen Aufweitung bei hohem Innendruck schützt. Darüber hinaus ist die Hülle 2 scheuerfest. Sie schützt daher das Rohr 1 auch gegen Abrieb. Für Reparaturzwecke ist sie leicht auswechselbar. Das Rohr 1 und die Hülle 2 sind außerdem recyclebar.

Der Heizleiter 3 ist in das Geflecht der Hülle 2 eingeflochten. Die Hülle 2 kann aber auch als Gewebe ausgebildet sein, in dem der Heizleiter 3 eingewebt ist. Er enthält einen Heizdraht 4, der ein langgestrecktes Isoliermaterial wendelförmig umgibt. Das Isoliermaterial ist ein Glasfaserbündel, um das der Heizdraht 4 wendelförmig herumgewickelt ist. Den Heizdraht 4 und das Glasfaserbündel umgibt eine durchsichtige, flexible Kunststoffschicht, die ihrerseits elektrisch isolierend ist. Ferner ist der Heizleiter 3 in der Hülle 2 verschiebbar.

Die Wendelform des Heizdrahtes 4 ermöglicht die Verwendung eines Widerstandsdrahtes mit geringem Widerstand pro Längeneinheit. Durch die Wendelform des Heizleiters 3 wird die Heizleistung pro Flächeneinheit des Rohres 1 gegenüber einer geradlinigen Anordnung des Heizleiters erhöht. Die Verschiebbarkeit des Heizleiters 3 in der Hülle 2 ermöglicht durch axiales Zusammendrücken des Geflechts der Hülle 2 das Herausschieben von Endabschnitten des Heizleiters 3 aus der Hülle 2, wenn die Enden des Heizleiters 3 beim Abschneiden eines die Hülle 2 bildenden Abschnitts von einer längeren ("endlosen") Hülle mit den Enden der abgeschnittenen Hülle 2 bündig sind. Die nach dem Zusammendrücken der Hülle 2 an ihren Enden herausragenden Abschnitte des Heizleiters 3 können dann abisoliert und der Heizdraht 4 mit einem Anschluß, wie dem schematisch dargestellten Anschlußstecker 5 oder einer Anschlußklemme, versehen werden, um den Heizleiter 3 mit einer Stromquelle zu verbinden. Umgekehrt kann der Heizleiter 3, wenn sein eines Ende mit dem einen Ende der Hülle 2 bündig abschließt und sein anderes Ende hinreichend weit aus dem anderen Ende der Hülle 2 herausragt, in der Hülle 2 so weit verschoben werden, bis das eine Ende ebenfalls aus der Hülle 2 herausragt, um mit einem Anschluß versehen werden zu können.

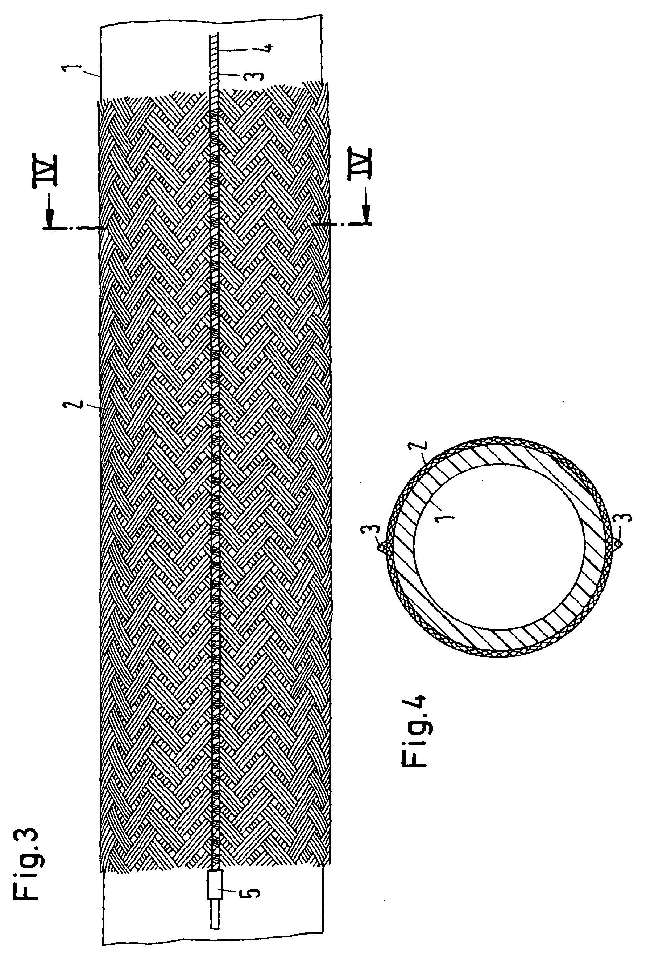

Das Ausführungsbeispiel nach den Fig. 3 und 4 unterscheidet sich von dem ersten Ausführungsbeispiel nur dadurch, daß der Heizleiter 3 nicht wendelförmig, sondern geradlinig in der Hülle 2 eingearbeitet ist und statt des einen Heizleiters, wie bei dem ersten Ausführungsbeispiel, zwei sich diametral gegenüberliegende Heizleiter 3 vorgesehen sind, die entweder in Reihe oder parallelgeschaltet werden können, so daß die Fluidströmung in dem Rohr 1 von zwei Seiten beheizt wird.

Die dargestellten Ausführungsbeispiele können in vieler Hinsicht abgewandelt werden: Die Hülle kann an mindestens einer Stelle auf dem Rohr, nachdem sie auf das Rohr geschoben wurde, befestigt worden sein, um eine unbeabsichtigte Verschiebung der Hülle zu verhindern.

Die Hülle 1 kann auch mit einer Schutzhülle umgeben sein. Diese kann thermoplastischen Kunststoff aufweisen und um die Hülle 1 herum angeordnet, herumgespritzt oder auf sie aufextrudiert sein.

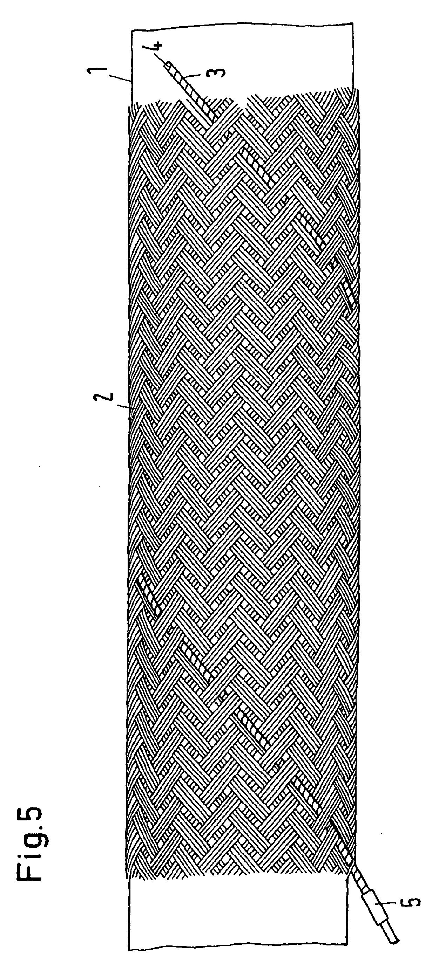

Während der Leiter 3 bei den Ausführungsbeispielen nach den Fig. 1 bis 4 nahezu nur punktförmig an denjenigen Stellen am Rohr 1 anliegen kann, an denen wenige Fäden des Geflechts der Hülle 2 dicht nebeneinander über ihn hinweggeführt sind, wie es schematisch in den Zeichnungen angedeutet ist, liegt der Leiter 3 bei dem Ausführungsbeispiel nach Fig. 5 großflächiger am Rohr 1 an, wo er unter mehreren nebeneinanderliegenden Faserbündeln der Hülle 2 hinweggeführt ist. Dadurch ergibt sich eine bessere Wärmeübertragung zwischen Rohr 1 und Leiter 3.

## Patentansprüche

1. Fluidleitung mit einem Rohr (1), das eine Hülle (2) aus einem Gewebe oder Geflecht aufweist, das seinerseits mindestens einen Leiter (3) aufweist, wobei die Hülle (2) im fertigen Zustand der Fluidleitung das Rohr (1) unmittelbar umgibt und jeder Leiter (3) lose in der Hülle (2) angeordnet ist, wobei jeder Leiter, (3) einen elektrischen Heizdraht (4) aufweist, und wobei jeder Heizdraht (4) in Isoliermaterial angeordnet ist **dadurch gekennzeichnet, daß** das Isoliermaterial ein Glasfaserbündel, um das jeder Heizdraht (4) wendelförmig herumgewickelt ist, und eine den Heizdraht (4) und das Glasfaserbündel umgebende, flexible Kunststoffschicht aufweist.

2. Fluidleitung nach Anspruch 1, **dadurch gekennzeichnet, daß** die Hülle (2) das Rohr (1) nach außen freiliegend umgibt.

3. Fluidleitung nach Anspruch 1 oder 2, **dadurch gekennzeichnet, daß** jeder Heizleiter (3) in der Hülle (2) eingewebt oder eingeflochten ist und durch das Material der Hülle (2) hindurch stellenweise am Rohr (1) anliegt.

4. Fluidleitung nach einem der Ansprüche 1 bis 3, **dadurch gekennzeichnet, daß** die Hülle (2) aus Glas-, Kunststoff-, Natur-, Kohlenstoff-, Mineral- oder Metallfasern besteht.

5. Fluidleitung nach einem der Ansprüche 1 bis 3, **dadurch gekennzeichnet, daß** jeder Leiter (3) geradlinig oder gewunden angeordnet ist.

6. Fluidleitung nach Anspruch 5, **dadurch gekennzeichnet, daß** jeder gewundene Leiter (3) wendelförmig um das Rohr (1) herumgewickelt ist.

7. Fluidleitung nach einem der vorstehenden Ansprüche, **dadurch gekennzeichnet, daß** das Rohr (1) glatt oder gewellt ist.

8. Fluidleitung nach einem der vorstehenden Ansprüche, **dadurch gekennzeichnet, daß** die Hülle (2) lose auf dem Rohr (1) angeordnet ist.

9. Fluidleitung nach einem der Ansprüche 1 bis 8, **dadurch gekennzeichnet, daß** jeder Leiter (3) in der Hülle (2) in deren Längsrichtung verschiebbar ist.

10. Fluidleitung nach einem der Ansprüche 1 bis 9, **dadurch gekennzeichnet, daß** die Hülle (2) an mindestens einer Stelle auf dem Rohr (1) befestigt ist.

11. Fluidleitung nach einem der Ansprüche 1 und 3 bis 11, ohne Anspruch 2, **dadurch gekennzeichnet, daß** die Hülle (2) von einer Schutzhülle umgeben ist.

12. Fluidleitung nach Anspruch 11, **dadurch gekennzeichnet, daß** die Schutzhülle thermoplastischen Kunststoff aufweist und um die Hülle (2) herum angeordnet, herumgespritzt oder auf sie aufextrudiert ist.

## Claims

1. A fluid line comprising a pipe (1) with a sleeve (2) of a woven or braided fabric, wherein the woven or braided fabric includes at least one conductor (3), and wherein, in a finished state of the fluid line, the sleeve (2) immediately surrounds the pipe (1) and each conductor (3) is loosely arranged in the sleeve (2), wherein each conductor (3) comprises an electrical heating wire (4), and wherein each heating wire (4) is arranged in insulating material, **characterised in that** the insulating material comprises a glass fiber bundle around which each heating wire (4) is wound helically, and a flexible plastic layer surrounding the heating wire (4) and the glass fiber bundle.

2. The fluid line according to claim 1, **characterised in that** the sleeve (2) surrounds the pipe (1) and is outwardly exposed.

3. The fluid line according to claim 1 or 2, **characterised in that** each heating wire (3) is woven or braided into the sleeve (2) and is partially in contact with the pipe (1) through the material of the sleeve (2).

4. The fluid line according to any of claims 1 to 3, **characterised in that** the sleeve (2) is composed of glass fibers, plastic fibers, natural fibers, carbon fibers, mineral fibers or metal fibers.

5. The fluid line according to any of claims 1 to 3, **characterised in that** each conductor (3) is arranged straight or coiled.

6. The fluid line according to claim 5, **characterised in that** each coiled conductor (3) is wound helically around the pipe (1).

7. The fluid line according to any of the previous claims, **characterised in that** the pipe (1) is smooth or corrugated.

8. The fluid line according to any of the previous claims, **characterised in that** the sleeve (2) is arranged loosely on the pipe (1).

9. The fluid line according to any of claims 1 to 8, **characterised in that** each conductor (3) is slidable in longitudinal direction in the sleeve (2).

10. The fluid line according to any of claims 1 to 9, **characterised in that** the sleeve (2) is attached at at least one location to the pipe (1).

11. The fluid line according to any of claims 1 or 3 to 11, without claim 2, **characterised in that** the sleeve (2) is surrounded by a protective sleeve.

12. The fluid line according to claim 11, **characterised in that** the protective sleeve includes thermoplastic material and the protective sleeve is arranged, injected or extruded onto the sleeve (2).

## Revendications

1. Conduit à fluide comportant un tube (1) qui comprend une gaine (2) en un tissu ou un treillis qui présente à son tour au moins un conducteur (3), la gaine (2) entourant directement le tube (1) dans l'état fini du conduit à fluide et chaque conducteur (3) étant agencé de façon lâche dans la gaine (2), chaque conducteur (3) présentant un fil chauffant électrique (4) et chaque fil chauffant (4) étant agencé dans un matériau isolant, **caractérisé en ce que** le matériau isolant comprend un faisceau de fibres de verre autour duquel chaque fil chauffant (4) est enroulé en forme hélicoïdale, ainsi qu'une couche flexible en matière plastique entourant le fil chauffant (4) et le faisceau de fibres de verre.

2. Conduit à fluide selon la revendication 1, **caractérisé en ce que** la gaine (2) entoure le tube (1) en étant à découvert vers l'extérieur.

3. Conduit à fluide selon la revendication 1 ou 2, **caractérisé en ce que** chaque conducteur chauffant (3) est intégré par tissage ou tressage dans la gaine (2) et prend localement appui contre le tube (1) à travers le matériau de la gaine (2).

4. Conduit à fluide selon l'une des revendications 1 à 3, **caractérisé en ce que** la gaine (2) est constituée de fibres de verre, de fibres de matière plastique, de fibres naturelles, de fibres de carbone, de fibres minérales ou de fibres métalliques.

5. Conduit à fluide selon l'une des revendications 1 à 3, **caractérisé en ce que** chaque conducteur (3) est agencé en ligne droite ou en spirale.

6. Conduit à fluide selon la revendication 5, **caractérisé en ce que** chaque conducteur en spirale (3) est enroulé en forme hélicoïdale autour du tube (1).

7. Conduit à fluide selon l'une des revendications précédentes, **caractérisé en ce que** le tube (1) est lisse ou ondulé.

8. Conduit à fluide selon l'une des revendications précédentes, **caractérisé en ce que** la gaine (2) est agencée de façon lâche sur le tube (1).

9. Conduit à fluide selon l'une des revendications 1 à 8, **caractérisé en ce que** chaque conducteur (3) est mobile en translation dans la gaine (2) dans sa direction longitudinale.

10. Conduit à fluide selon l'une des revendications 1 à 9, **caractérisé en ce que** la gaine (2) est fixée sur le tube (1) à au moins un emplacement.

11. Conduit à fluide selon l'une des revendications 1 et 3 à 11, sans la revendication 2, **caractérisé en ce que** la gaine (2) est entourée par une enveloppe protectrice.

12. Conduit à fluide selon la revendication 11, **caractérisé en ce que** l'enveloppe protectrice présente une matière thermoplastique et est agencée autour de la gaine (2) par projection ou extrusion sur celle-ci.
